# FASCICULE DE BREVET EUROPEEN

(11) **EP 1 209 074 B1**
(45) Date de publication et mention de la délivrance du brevet: **27.08.2003**
(21) Numéro de dépôt: 01402732.0
(22) Date de dépôt: 19.10.2001
(51) Int. Cl.: B63H 25/10, B63H 25/14, F16H 37/08

(54) **Ensemble pour orienter un organe de gouverne d'un navire**
Antriebssystem zum Steuern der Ruderanlage eines Schiffes
Driving set for turning the steering system of a ship

(30) Priorité: 28.11.2000 FR 0015350
(43) Date de publication de la demande: 29.05.2002
(73) Titulaire: Alstom, 75116 Paris (FR)
(72) Inventeur: Renaud, Jean-Yves, 44600 St-Nazaire (FR)
(74) Mandataire: Gosse, Michel

(56) Documents cités:
- GB-A- 2 012 387
- "Novel design applications based on mechanism theory" PRODUCT ENGINEERING, vol. 44, no. 1, janvier 1973 (1973-01), pages 29-30, XP002173734

## Description

La présente invention concerne un ensemble pour orienter un organe de gouverne d'un navire.

L'invention s'applique pour la fonction gouverne d'un navire que celle-ci soit assurée par un ou des safrans ou bien par un ou des pods orientables. Un pod, comme cela est connu, est un ensemble immergé, extérieur à la coque du navire et contenant la motorisation de propulsion et d'où sort l'hélice. Un tel pod est orientable et assure ainsi, outre la fonction de propulsion, la fonction de gouverne d'un safran traditionnel.

Sur les navires de fort tonnage, ces organes de gouverne sont commandés par des ensembles électro-hydrauliques : l'énergie électrique alimente des moteurs électriques entraînant des pompes hydrauliques qui alimentent soit des moteurs hydrauliques, soit des vérins rotatifs ou linéaires agissant sur l'organe de gouverne. De tels ensembles électro-hydrauliques, dans lesquels on met en oeuvre de l'huile sous haute pression, sont lourds, encombrants, bruyants et générateurs de risques de fuites d'huile et cela d'autant plus que, pour des raisons de sécurité, la réglementation impose au minimum un ensemble principal de commande de gouverne et un ensemble auxiliaire de gouverne en cas de panne de l'ensemble principal.

Un ensemble de ce genre est connu depuis le document GB 2012387.

La présente invention propose une nouvelle solution pour la commande d'un organe de gouverne d'un navire, solution ne présentant pas les inconvénients cités ci-dessus d'un ensemble de commande électro-hydraulique tout en étant moins coûteuse.

L'invention a ainsi pour objet un ensemble pour orienter un organe de gouverne d'un navire, caractérisé en ce qu'il comprend P moteurs électriques pour commander la rotation dudit organe de gouverne par l'intermédiaire de l'arbre de sortie mené d'un réducteur additionneur de vitesses comprenant P arbres d'entrée menants et ledit arbre de sortie mené, ledit réducteur comprenant P-1 différentiels associés, chaque différentiel comprenant deux pignons planétaires, au moins un pignon satellite et une coquille de différentiel, les arbres des pignons planétaires de chaque différentiel pris isolément étant, pour le différentiel considéré, des arbres menants tandis que sa coquille est menée, ledit arbre de sortie mené dudit réducteur additionneur de vitesses étant entraîné en rotation par la coquille de l'un des P-1 différentiels, un moyen permettant d'assurer l'irréversibilité de chaque moteur étant disposé entre chaque arbre d'entrée menant et le moteur électrique associé.

On va maintenant donner la description d'un exemple de mise en oeuvre de l'invention en se reportant au dessin annexé dans lequel :
La fig. 1 est un schéma général d'un ensemble, selon l'invention, pour orienter un organe de gouverne d'un navire.
La fig. 2 montre un élément de l'ensemble représenté fig. 1. Cet élément est le réducteur additionneur de vitesses dans le cas où l'ensemble comprend deux moteurs, le réducteur étant alors composé d'un seul différentiel.
La fig. 3 montre également un réducteur additionneur de vitesses pour le cas où l'ensemble comprend trois moteurs d'entraînement. Ici, le réducteur additionneur comprend deux différentiels associés.
Les fig. 4 et 5 sont des schémas figurant deux types distincts d'association de trois différentiels pour constituer un réducteur additionneur pour un ensemble où il y a quatre moteurs d'entraînement.

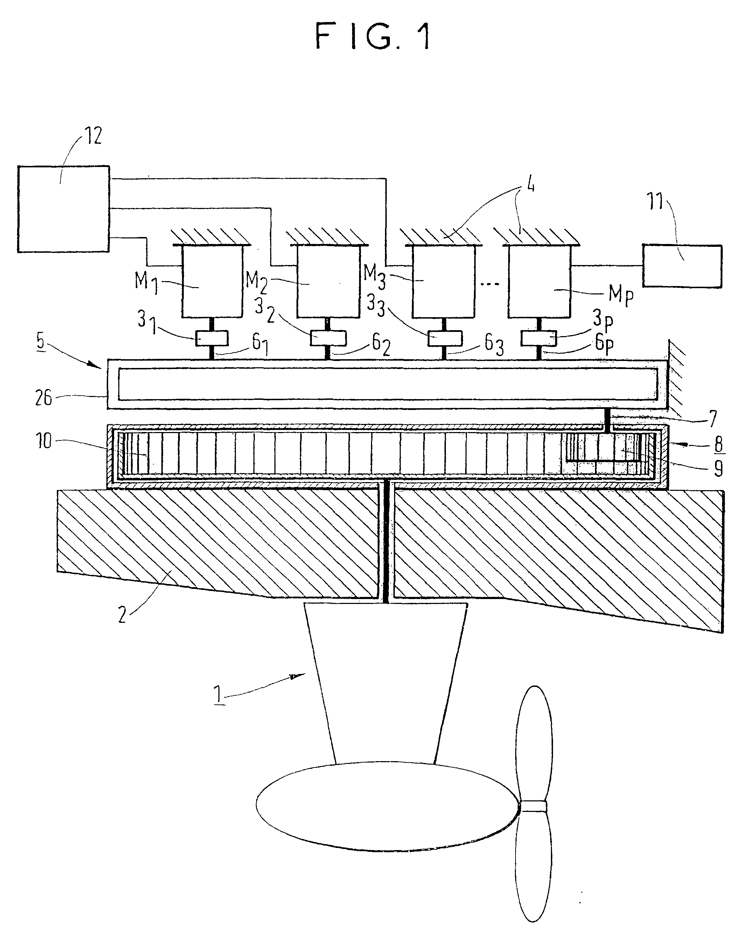

En se référant à la fig. 1, ont voit un ensemble, selon l'invention, pour orienter un organe de gouverne 1 d'un navire dont seule une partie de la structure du fond de coque 2 est représentée.

L'organe de gouverne 1 est, soit un safran, soit, comme dit plus haut, un pod.

L'ensemble de commande pour orienter l'organe 1 comprend P moteurs électriques référencés M₁, M₂, M₃, M_{P}. Chacun de ces moteurs est un moto-réducteur ou bien un moteur associé à un étage réducteur externe ou à un frein, respectivement 3₁, 3₂, 3₃ ... 3_{P}. S'il s'agit d'un frein, il peut aussi, bien entendu, être intégré au moteur.

Les moteurs sont fixes, liés à la structure 4 du navire. Il en est de même pour le boîtier 26 du réducteur de vitesse 5.

Les moteurs commandent la rotation de l'organe de gouverne 1 par l'intermédiaire d'un réducteur additionneur de vitesses 5 qui comprend P arbres d'entrée menants, respectivement référencés 6₁, 6₂, 6₃ ... 6_{P}, reliés respectivement aux moteurs M₁, M₂ ... M_{P}, et un arbre de sortie mené 7.

L'arbre de sortie mené 7 entraîne l'organe de gouverne 1 en rotation par l'intermédiaire d'un étage final de réduction 8 comprenant un pignon 9 lié à l'arbre de sortie 7 et engrenant sur une couronne 10 liée à l'organe 1.

Les réducteurs 3₁, 3₂, 3₃ ... 3_{P}, s'il s'agit de réducteurs, ou des moto-réducteurs, si les moteurs sont des moto-réducteurs, sont tels que le système est irréversible, c'est-à-dire que si un moteur quelconque tombe en panne l'arbre d'entrée correspondant est bloqué, ceci de façon à ce que cet arbre ne devienne pas un arbre mené et que la sortie soit toujours l'arbre 7.

Cette irréversibilité peut aussi être assurée par un frein sur chaque moteur qui bloque l'arbre si le moteur correspondant est en panne.

Bien entendu, la rotation des moteurs peut être commandée dans un sens ou dans l'autre pour orienter l'organe de gouverne 1 vers babord ou vers tribord.

Au moins l'un des moteurs, ici le moteur M_{P}, est alimenté par une alimentation électrique de secours 11, par exemple par batteries.

Les autres moteurs sont alimentés par l'alimentation générale 12 du navire.

Le réducteur additionneur de vitesses 5 comporte ainsi P arbres d'entrées s'il y a P moteurs et un seul arbre de sortie, mené, 7.

Un tel réducteur est composé d'un ou de plusieurs différentiels associés : P-1 différentiels pour P moteurs d'entraînement.

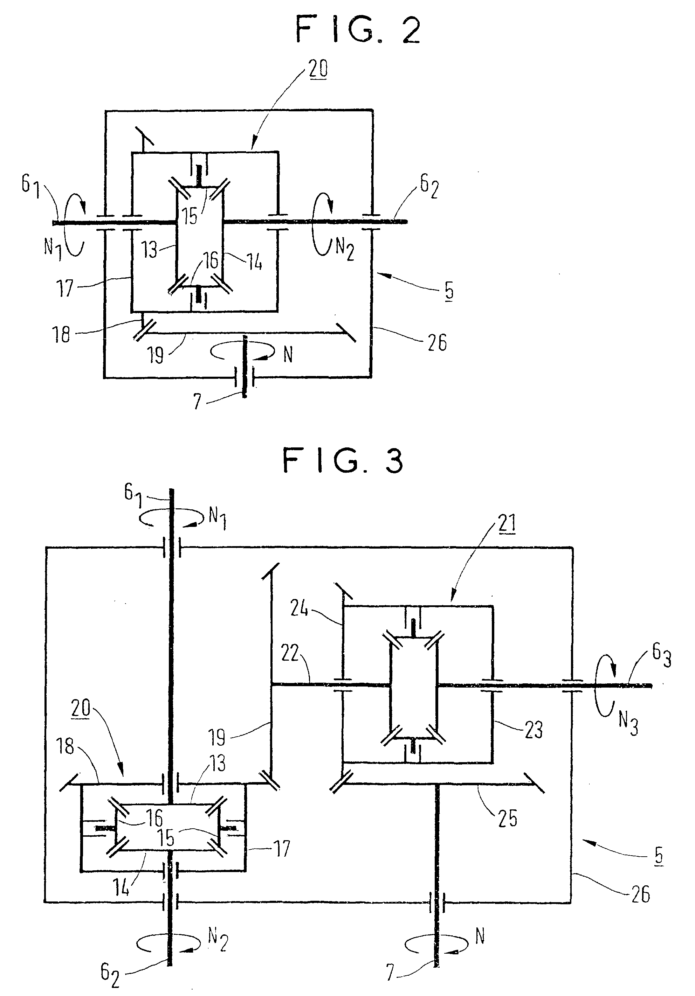

La fig. 2 montre un exemple de réducteur 5 dans le cas où l'on utilise deux moteurs pour l'entraînement de l'organe de gouverne.

Dans ce cas, le réducteur se compose d'un seul différentiel 20 comportant classiquement deux pignons planétaires 13 et 14, deux pignons satellites 15, 16, et une coquille de différentiel 17. Les arbres menants 6₁ et 6₂ sont reliés aux pignons planétaires 13 et 14, et l'arbre de sortie, mené, 7 récolte le mouvement de la coquille 17 menée par l'intermédiaire de pignons 18 et 19 dont le rapport est choisi en fonction de la réduction que l'on souhaite par rapport à la vitesse de rotation du pignon 18, c'est-à-dire de la coquille 17.

Les moteurs M₁ et M₂ sont ainsi accouplés aux arbres d'entrée 6₁ et 6₂ et, bien entendu, des pignons de renvoi permettent, si on le souhaite, d'aligner ces deux moteurs pour avoir par exemple la disposition de la fig. 1.

La fig. 3 montre le cas d'un réducteur 5 si l'on utilise trois moteurs M₁, M₂ et M₃ pour l'entraînement de l'organe de gouverne 1.

On a alors deux différentiels 20 et 21 associés. L'une, 22, des deux entrées 22 et 6₃ du différentiel 21 provient de la sortie du différentiel 20. Les trois moteurs M₁, M₂ et M₃ sont accouplés aux trois arbres menants d'entrée 6₁, 6₂ et 6₃ et la sortie menée 7 correspond au mouvement de la coquille 23 du différentiel 21 récolté par l'intermédiaire de pignons 24 et 25.

Les moteurs sont toujours reliés à un arbre d'entrée relié à un pignon planétaire des différentiels tandis que la sortie 7 est toujours prise sur la coquille d'un différentiel. Ici encore, les trois arbres d'entrée 6₁, 6₂ et 6₃ peuvent être alignés dans un même plan par des pignons de renvoi de façon à aligner les moteurs comme sur la fig. 1.

Si l'on appelle N la vitesse de rotation de l'arbre de sortie 7, N₁ la vitesse de rotation de l'arbre d'entrée 6₁, N₂ celle de l'arbre d'entrée 6₂ ... N_{P} celle de l'arbre d'entrée 6_{P}, on a : N = aN₁ + bN₂ + cN₃ + ... + kN_{P}.

Dans le cas de la fig. 2, donc avec deux moteurs et si les pignons de sortie 18 et 19 sont identiques, on a : N = 1/2 (N₁ + N₂).

Dans le cas de la fig. 3, si les pignons 18 et 19 sont identiques et si les pignons 24 et 25 sont identiques, on a : N = 1/4 (N₁ + N₂) + 1/2 N₃.

Dans la formule ci-dessus, les coefficients a, b, c ... k s'obtiennent par le choix des rapports d'engrenages des pignons de sortie 18, 19 ; 24, 25, etc. et des éventuels pignons de renvoi. Ces coefficients peuvent avoir toutes valeurs et certains peuvent même être négatifs si l'on veut des vitesses très lentes.

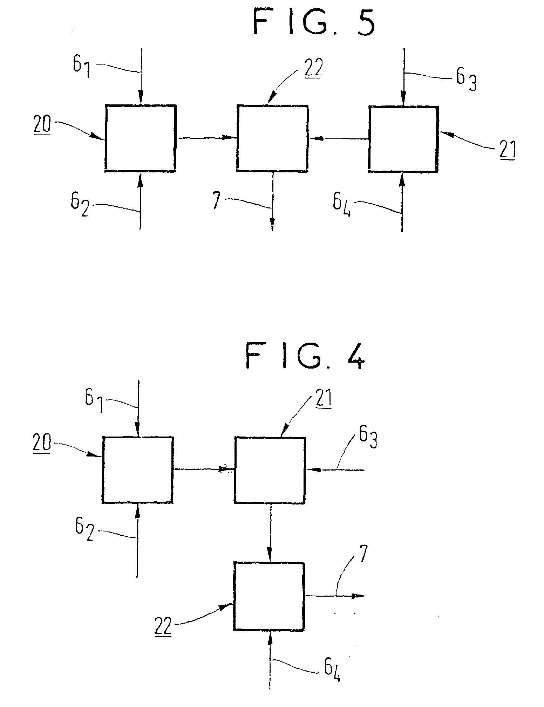

La fig. 4 est un schéma bloc montrant l'association de trois différentiels 20, 21 et 22 pour quatre moteurs d'entraînement M₁, M₂, M₃ et M₄ respectivement couplés aux arbres 6₁, 6₂, 6₃ et 6₄ liés à des pignons planétaires.

La sortie 7 est prise sur la coquille du différentiel 22. La sortie du différentiel 20 est une entrée menante donc reliée à un pignon planétaire du différentiel 22 et de même la sortie du différentiel 21 est une entrée menante donc reliée à un pignon planétaire du différentiel 22.

La fig. 5 est une variante d'association des différentiels pour le même nombre de moteurs.

Les arbres d'entrée 6₁, 6₂, 6₃ et 6₄ étant toujours reliés à un pignon planétaire des différentiels et la sortie 7 étant toujours prise sur la coquille d'un différentiel.

D'une manière générale, en prenant un différentiel isolément et pour ce différentiel, les pignons planétaires sont des entrées donc menants et la coquille est une sortie donc menée.

Avec la solution de la présente invention, le taux de disponibilité de l'ensemble est extrêmement élevé. En effet, tant qu'il reste au moins un moteur en marche, l'organe de gouverne 1 peut être manoeuvré.

Le réducteur 5 étant un réducteur additionneur de vitesses, le couple nominal sur l'organe de gouverne 1 reste disponible en permanence quel que soit le nombre de moteurs en service, seule change la vitesse de sortie.

La perte d'alimentation ou la panne d'un moteur entraîne automatiquement le fonctionnement dans le mode dégradé immédiatement inférieur (en vitesse seulement) sans intervention d'un opérateur et sans influence sur le fonctionnement des autres moteurs.

Des moteurs, de puissances, vitesses et types différents peuvent être combinés sans aucune perturbation du fonctionnement global de l'ensemble. Un moteur à courant continu, alimenté directement par batteries, constituant par exemple le moteur de secours, peut être combiné avec des moteurs à courant alternatif de puissance plus élevée.

## Revendications

1. Ensemble pour orienter un organe de gouverne (1) d'un navire, **caractérisé en ce qu'**il comprend P moteurs électriques (M₁, M₂ ... M_{P}) pour commander la rotation dudit organe de gouverne (1) par l'intermédiaire de l'arbre de sortie mené (7) d'un réducteur additionneur de vitesses (5) comprenant P arbres d'entrée menants (6₁, 6₂ ... 6_{P}) et ledit arbre de sortie mené (7), ledit réducteur (5) comprenant P-1 différentiels associés (20, 21, 22), chaque différentiel comprenant deux pignons planétaires (13, 14), au moins un pignon satellite (15, 16) et une coquille de différentiel (17, 23), les arbres des pignons planétaires de chaque différentiel (6₁, 6₂, 22, 6₃) pris isolément étant, pour le différentiel considéré, des arbres menants tandis que sa coquille (17, 23) est menée, ledit arbre de sortie mené (7) dudit réducteur additionneur de vitesses (5) étant entraîné en rotation par la coquille de l'un des P-1 différentiels, un moyen (3₁, 3₂ ... 3_{P}) permettant d'assurer l'irréversibilité de chaque moteur étant disposé entre chaque arbre d'entrée menant (6₁, 6₂ ... 6_{P}) et le moteur électrique (M₁, M₂ ... M_{P}) associé.

2. Ensemble selon la revendication 1, **caractérisé en ce que** le nombre P de moteurs électriques est au moins égal à deux.

3. Ensemble selon l'une des revendications 1 ou 2, **caractérisé en ce qu'**au moins un moteur électrique (M_{P}) est alimenté par un moyen (11) d'alimentation électrique de secours.

## Patentansprüche

1. Einheit zum Orientieren eines Ruderorgans (1) eines Schiffes,
**dadurch gekennzeichnet, dass** sie P Elektromotoren (M₁, M₂...M_{P}) zum Steuern der Rotation des Ruderorgans (1) mittels der getriebenen Abtriebs- bzw. Ausgangswelle (7) eines Drehzahladdier-Untersetzungsgetriebes (5) aufweist, das P treibende Eingangswellen (6₁, 6₂ ... 6_{P}) und die getriebene Abtriebs- bzw. Ausgangswelle (7) umfasst, wobei das Untersetzungsgetriebe (5) P-1 zugeordnete Differentiale (20, 21, 22) aufweist, wobei jedes Differential zwei Tellerräder (13, 14), mindestens ein Planetenrad (15, 16) und ein Differentialgehäuse (17, 23) aufweist, wobei die Wellen der Tellerräder eines jeden Differentials (6₁, 6₂, 22, 6₃) einzeln genommen für das betrachtete Differential Antriebswellen sind, während sein Gehäuse (17, 23) getrieben wird, wobei die getriebene Abtriebswelle (7) des Drehzahladdier-Untersetzungsgetriebes (5) durch das Gehäuse des einen der P-1 Differentiale in Drehung versetzt wird, wobei ein Mittel (3₁, 3₂ ... 3_{P}) gestattet, die Nichtumkehrbarkeit eines jeden Motors zu gewährleisten, der zwischen einer jeden treibenden Eingangswelle (6₁, 6₂ ... 6_{P}) und dem zugeordneten Elektromotor (M₁, M₂...M_{P}) angeordnet ist.

2. Einheit nach Anspruch 1,
**dadurch gekennzeichnet, dass** die Anzahl P von Elektromotoren mindestens gleich zwei ist.

3. Einheit nach Anspruch 1 oder 2,
**dadurch gekennzeichnet, dass** mindestens ein Elektromotor (M_{P}) durch ein Mittel (11) zur elektrischen Not-Stromversorgung gespeist wird.

## Claims

1. An assembly for steering a steering member (1) of a ship, said assembly being **characterized in that** it comprises P electric motors (M₁, M₂, ..., M_{P}) for causing said steering member (1) to turn via the driven outlet shaft (7) of a speed-summing gearbox (5) comprising P driving inlet shafts (6₁, 6₂, ..., 6_{P}) and said driven outlet shaft (7), said gearbox (5) comprising P-1 associated differentials (20, 21, 22), each differential comprising two sun gear wheels (13, 14), at least one planet gear wheel (15, 16), and a differential casing (17, 23), the shafts of the sun gear wheels of each differential (6₁, 6₂, 22, 6₃), as considered in isolation and for the differential considered, being driving shafts while its casing (17, 23) is driven, said driven outlet shaft (7) of said speed-summing gearbox (5) being rotated by the casing of one of the P-1 differentials, means (3₁, 3₂, ..., 3_{P}) making it possible to guarantee that each motor is irreversible being disposed between each driving inlet shaft (6₁, 6₂, ..., 6_{P}) and the associated electric motor (M₁, M₂, ..., M_{P}).

2. An assembly according to claim 1, **characterized in that** the number P of electric motors is at least two.

3. An assembly according to claim 1 or claim 2, **characterized in that** at least one electric motor (M_{P}) is powered by emergency electrical power supply means (11).
